# EUROPEAN PATENT SPECIFICATION

(11) **EP 3 381 524 B1**
(45) Date of publication and mention of the grant of the patent: **12.07.2023**
(21) Application number: 17163974.3
(22) Date of filing: 30.03.2017
(51) Int. Cl.: A63F 13/56, A63F 13/573, A63F 13/577

(54) **CONTROLLING LOCOMOTION OF A PLURALITY OF NON-PLAYER CHARACTERS IN A SIMULATED MULTI-DIMENSIONAL WORLD SPACE**
STEUERUNG DER FORTBEWEGUNG MEHRERER NICHT-SPIELER-CHARACTER IN EINEM SIMULIERTEN MEHRDIMENSIONALEN WELTRAUM
COMMANDE DE LA LOCOMOTION D'UNE PLURALITÉ DE PERSONNAGES NON JOUEURS DANS UN ESPACE MULTIDIMENSIONNEL DE MONDE SIMULÉ

(43) Date of publication of application: 03.10.2018
(73) Proprietor: IO-Interactive A/S, 1117 Copenhagen K (DK)
(72) Inventor: De Pascale, Maurizio, 2100 Copenhagen (DK)
(74) Representative: Ström & Gulliksson AB

(56) References cited:
- US-A1- 2009 197 686
- Unity Technologies: "Unity - Manual: Making an Agent Patrol Between a Set of Points", , 12 March 2015 (2015-03-12), XP055408652, Retrieved from the Internet: URL:https://web.archive.org/web/2015031212 0640/http://docs.unity3d.com:80/Manual/nav -AgentPatrol.html [retrieved on 2017-09-21]
- Unity Technologies: "Unity - Manual: Coupling Animation and Navigation", , 12 March 2015 (2015-03-12), XP055408654, Retrieved from the Internet: URL:https://web.archive.org/web/2015031212 0645/https://docs.unity3d.com/Manual/nav-C ouplingAnimationAndNavigation.html [retrieved on 2017-09-21]
- World of Longplays: "SNES Longplay [315] The Legend of Zelda: A Link to the Past (a)", You Tube, 1 October 2013 (2013-10-01), pages 1-3, XP054977746, Retrieved from the Internet: URL:https://www.youtube.com/watch?v=Z6hjG6 MCcZ8 [retrieved on 2017-09-21]

## Description

### TECHNICAL FIELD

The present application relates to computer-based simulation of a multi-dimensional world space and, in particular, to a computer-implemented method for controlling locomotion of a plurality of non-player characters, NPCs, in such a simulated multi-dimensional world space. The present application also relates to an associated system, an associated game apparatus and an associated computer-readable medium.

### BACKGROUND

Computer-based simulation of a multi-dimensional world space is a task which may be complicated by conflicting demands. Generally, the needs and demands for end-user friendliness and perceived quality of service will have to be balanced against requirements on hardware, processing power, power consumption, as well as the perspectives at the developer side. One such complicated issue is the controlling of the locomotion of a plurality of non-player characters, NPCs, in the simulated multi-dimensional world space. As is well known per se, as the simulation progresses, artificial intelligence functionality determines various actions to be taken by the different NPCs. The determined actions often involve an intended movement of one or more individual NPCs from start point(s) to destination point(s) in the simulated multi-dimensional world space.

As the number of NPCs may be quite large (an order of 100 NPCs is not uncommon), controlling their locomotion is far from trivial. For instance, because of the multitude of NPCs, there is an apparent risk of collisions between NPCs, which needs to be handled in an accurate, coherent and yet resource-efficient manner.

Also, even though the NPCs play supporting roles rather than the leading role in the simulated multi-dimensional world space, it is important from an end-user perspective that their locomotion behaviors are perceived as natural as possible. Again, this needs to be done in an accurate, coherent and yet resource-efficient manner.

The present inventor has realised that there are room for improvements in the technical field of controlling locomotion of a plurality of NPCs in a simulated multi-dimensional world space.

US 2009/197686 A1 shows control of NPC following pre-determined paths in a video game. An NPC that follows a pre-determined path can constantly look for and take shortcuts. Also NPC can avoid obstacles on the pre-determined path.

### SUMMARY

Accordingly, it is an objective of the present invention to offer improvements in the technical field of controlling locomotion of a plurality of non-player characters, NPCs, in a simulated multi-dimensional world space, and to solve, eliminate, alleviate, mitigate or reduce at least some of the problems referred to above.

The invention is defined by the independent claims. The dependent claims concern optional features of some embodiments of the invention. References to embodiments which do not fall under the scope of the claims are to be understood as examples useful for understanding the invention.

Hence, improvements in the technical field of controlling locomotion of a plurality of NPCs in a simulated multi-dimensional world space have been provided. Further improvements are obtained in embodiments of the present invention, as will be clear from the detailed description, drawings and claims sections of this document.

Features and advantages which are described for the first aspect of the present invention in this document are applicable also to each of the second, third and fourth aspects of the present invention.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

In the accompanying drawings:
Figure 1 is a block diagram illustrating a configuration of a game apparatus implementing an example non-limiting embodiment.
Figure 2A shows components of a game program executed by the game apparatus of Figure 1, including a game data processing function and a game rendering function.
Figure 2B shows examples of game data according to a present example embodiment.
Figure 2C illustrates an example of a process of converting a 3D graphics scene to a game image for display on a display device.
Figure 3A illustrates a general computer-implemented method according to the present invention, involving selective switching between first and second control schemes for NPC locomotion.
Figure 3B illustrates a computer-implemented method according to an embodiment of the present invention.
Figure 4A is a schematic illustration of a current level of a simulated multi-dimensional world space.
Figure 4B is a schematic illustration of a navigation mesh used for establishing a path for movement of NPCs between different points in the simulated multi-dimensional world space.
Figure 4C is a schematic illustration of an established path between a start point and a destination point in the simulated multi-dimensional world space, the path including a plurality of intermediate nodes.
Figure 5A is a schematic illustration of a predetermined curve which is based on the entire established path between the start point and the destination point, and which approximately follows the nodes of the established path.
Figure 5B schematically illustrates the first control scheme for NPC locomotion, on-rail locomotion.
Figure 5C schematically illustrates a refined embodiment of the first control scheme for NPC locomotion, including also NPC collision avoidance functionality.
Figure 6 schematically illustrates the second control scheme for NPC locomotion, local steering locomotion.
Figure 7 is a high-level software diagram according to one implementation of the present invention.
Figure 8 is a detailed software diagram according to one implementation of the present invention.

It should be understood that the drawings are an aid to understanding certain aspects or embodiments, and are not to be construed as limiting.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

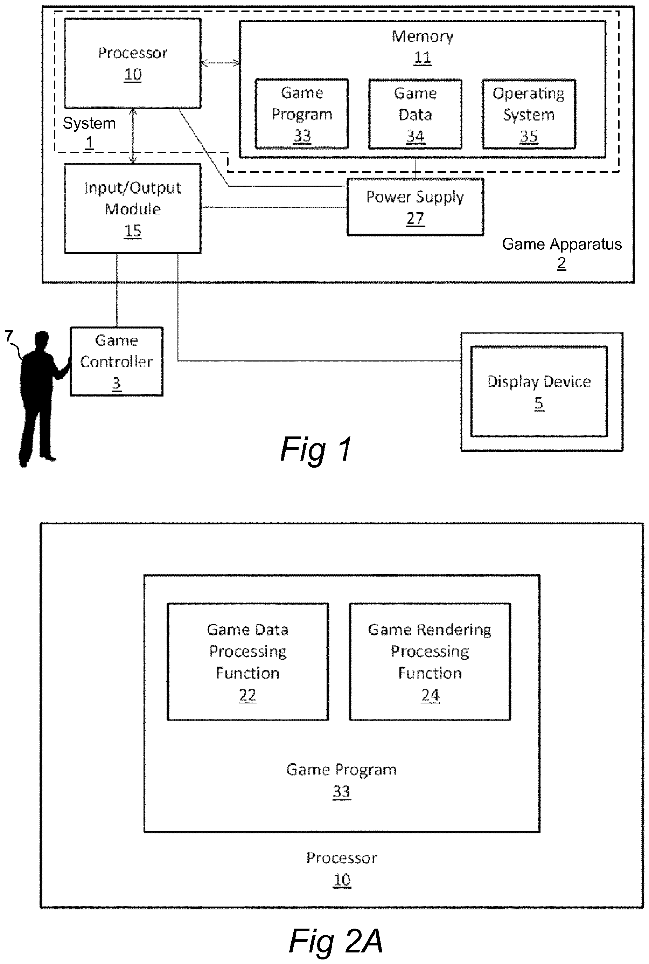

Figure 1 is a block diagram illustrating a configuration of a game apparatus 1 implementing an example non-limiting embodiment of the present invention. In some cases, the game apparatus 1 is a dedicated gaming console similar to an Xbox^{™}, Playstation^{™}, or Nintendo^{™} gaming console. In other cases, the game apparatus 1 is a multi-purpose workstation or laptop computer. In still other cases, the game apparatus 1 is a mobile device such as a smartphone. In yet other cases, the game apparatus 1 is a handheld game console.

The game apparatus 1 includes at least one processor 10, at least one computer readable memory 11, at least one input/output module 15 and at least one power supply unit 27, and may include any other suitable components typically found in a game apparatus used for playing video games. The various components of the game apparatus 1 may communicate with each other over one or more buses, which can be data buses, control buses, power buses and the like. The at least one processor 10 and the at least one computer readable memory 11 together forms a computing system 2 which is part of the game apparatus 1.

As shown in Figure 1, a user in the form of a player 7 is playing a game by viewing game images displayed on a screen of the display device 5 and controlling aspects of the game via a game controller 3. Accordingly, the game apparatus 1 receives inputs from the game controller 3 via the at least one input/output module 15. Hence, the input/output module 15 is an input/output interface to the player 7. The game apparatus 1 also supplies outputs to a display device 5 and/or an auditory device (e.g., a speaker, not shown) via the at least one input/output module 15. In other implementations, there may be more than one game controller 3 and/or more than one display device 5 connected to the input/output module 15.

The at least one processor 10 may include one or more central processing units (CPUs) having one or more cores. The at least one processor 10 may also include at least one graphics processing unit (GPU) in communication with a video encoder/video codec (coder/decoder, not shown) for causing output data to be supplied to the input/output module 15 for display on the display device 5. The at least one processor 10 may also include at least one audio processing unit in communication with an audio encoder/audio codec (coder/decoder, not shown) for causing output data to be supplied to the input/output module 15 to the auditory device.

The at least one computer readable memory 11 may include RAM (random access memory), ROM (read only memory), flash memory, hard disk drive(s), DVD/CD/Blu-ray^{™} drive and/or any other suitable memory device, technology or configuration. The computer readable memory 11 stores a variety of information including a game program 33, game data 34 and an operating system 35. As will be understood from subsequent sections of this detailed description, information for simulating a multi-dimensional world space is included in the game data 34 stored in the memory 11.

When the game apparatus 1 is powered on, the processor 10 is configured to run a booting process which includes causing the processor 10 to communicate with the computer readable memory 11. In particular, the booting process causes execution of the operating system 35. The operating system 35 may be any commercial or proprietary operating system suitable for a game apparatus. Execution of the operating system 35 causes the processor 10 to generate images displayed on the display device 5, including various options that are selectable by the player 7 via the game controller 3, including the option for the player 7 to start and/or select a video game to be played. The video game selected/started by the player 7 is encoded by the game program 33.

The processor 10 is configured to execute the game program 33 such that the processor 10 is able to perform various kinds of information processing functions related to the video game that it encodes. In particular, and with reference to Figure 2A, execution of the game program 33 causes the processor 10 to execute a game data processing function 22 and game rendering function 24, which are now described.

The game rendering function 24 includes generation of a game image to be displayed on the display device 5. For its part, the game data processing function 22 includes processing of information representing progress of the game or a current state of the game (e.g., processing of information relating to the game that is not necessarily displayed on the display device 5). The game data processing function 22 and the game rendering function 24 are illustrated in Figure 2A as forming part of a single game program 33. However, in other embodiments, the game data processing function 22 and the game rendering function 24 may be separate programs stored in separate memories and executed by separate, possibly distant, processors. For example, the game data processing function 22 may be performed on a CPU and game rendering function 24 may be performed on a GPU.

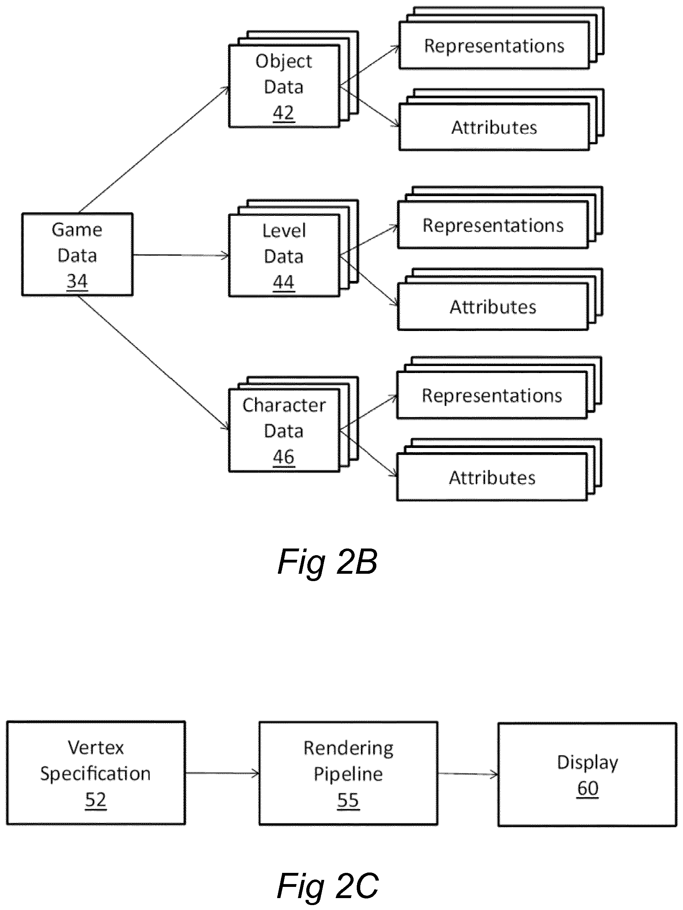

In the course of executing the game program 33, the processor 10 manipulates constructs such as objects, characters and/or levels according to certain game rules and applying certain artificial intelligence algorithms as defined by the game program 33. In the course of executing the game program 33, the processor 10 creates, loads, stores, reads and generally accesses the game data 34, which includes data related to the object(s), character(s) and/or level(s). Figure 2B shows examples of game data 34 according to a present example embodiment. The game data 34 may include data related to the aforementioned constructs and therefore may include object data 42, character data 46 and/or level data 44.

An object may refer to any element or portion of an element in the game environment that can be displayed graphically in a game image frame. An object may include 3-dimensional representations of buildings, vehicles, furniture, plants, sky, ground, ocean, sun, and/or any other suitable elements. The object may have other non-graphical representations such as numeric, geometric or mathematical representations. The object data 42 stores data relating to the current representation of the object such as the graphical representation in a game image frame or a numeric, geometric or mathematical representation. The object data 42 may also store attributes such as imaging data, position data, material/texture data, physical state data, visibility data, lighting data (e.g., direction, position, color and/or intensity), sound data, motion data, collision data, environment data, timer data and/or other data associated with the object.

A character is similar to an object except that the attributes are more dynamic in nature and it has additional attributes that objects typically do not have. For example, certain attributes of a playing character may be controlled by the player 7; hence, such a character is a player-controlled character. Certain attributes of a character that is a non-player character (NPC) may be controlled by the game program 33. Examples of characters include a person, an avatar, an animal, and/or any other suitable object. The character may have other non-visual representations such as numeric, geometric or mathematical representations. A character may be associated with one or more objects such as a weapon held by a character or clothes donned by the character. The character data 46 stores data relating to the current representation of the character such as the graphical representation in a game image frame or a numeric, geometric or mathematical representation. The character data 46 may also store attributes such as imaging data, position data, material/texture data, physical state data, visibility data, lighting data (e.g., direction, position, color and/or intensity), sound data, motion data, collision data, environment data, timer data and/or other data associated with the character.

A level may refer to a specific arrangement of objects within the game environment, through which the characters must navigate. A level may include data regarding paths that may be traveled by characters. A level may also include data that encodes objectives, goals, challenges or puzzles involving the characters and the objects. Although a level has a graphical representation the can be rendered and displayed on a two-dimensional display device such as the display device 5, a level may have other non-visual representations such as numeric, geometric or mathematical representations. Also, there may be multiple levels, each with their own level data 44.

The game data 34 may also include data relating to the current view or camera angle of the game (e.g., first-person view, third-person view, etc.) as displayed on the display device 5 which may be part of the representations and/or attributes of the object data 42, level data 44 and/or character data 46.

In executing the game program 33, the processor 10 may cause an initialization phase to occur after the player 7 has selected/started the game, causing initialization of the game. The initialization phase is used to carry out any necessary game setup and prepare the game data 34 for the start of the game. The game data 34 changes during the processing of the game program 33 (i.e., during the playing of the game) and the terminology "game state" is used herein to define the current state or properties of the game data 34 and hence the various object data 42, character data 46 and/or level data 44 and their corresponding representations and/or attributes.

After the initialization phase, the processor 10 in execution of the game program 33 may implement one or more game loops. The one or more game loops run continuously during gameplay causing the game data processing function 22 and the game rendering function 24 to be routinely performed.

A game loop may be implemented where the game data processing function 22 is performed to process the player's input via the game controller 3 and update the game state and afterwards the game rendering function 24 is performed to cause the game image to be rendered based on the updated game state for display on the display device 5. The game loop may also track the passage of time to control the rate of gameplay. It should be appreciated that parameters other than player inputs can influence the game state. For example, various timers (e.g., elapsed time, time since a particular event, virtual time of day, etc.) can have an effect on the game state. In other words, the game keeps moving even when the player 7 is not providing input, and, as such, the game state may be updated in the absence of the player's input.

In general, the number of times the game data processing function 22 is performed per second specifies the updates to the game state per second (hereinafter "updates per second"), and the number of times the game rendering function 24 is performed per second specifies game image rendering per second (hereinafter "frames per second"). In theory, the game data processing function 22 and the game rendering function 24 would be called the same number of times per second. By way of a specific and non-limiting example, if the target is 25 frames per second, it would be desirable to have the game data processing function 22 and the game rendering function 24 both being performed every 40 ms (i.e., 1 s / 25 FPS). In the case where the game data processing function 22 is performed and afterwards the game rendering function 24 is performed, it should be appreciated that both the game data processing function 22 and the game rendering function 24 would need to be performed in the 40 ms time window. Depending on the current game state, it should be appreciated that the time of performing the game data processing function 22 and/or the game rendering function 24 may vary. If both the game data processing function 22 and the game rendering function 24 take less than 40 ms to perform, a sleep timer may be used before performing the next cycle of the game data processing function 22 and the game rendering function 24. However, if the game data processing function 22 and the game rendering function 24 take more than 40 ms to perform for a given cycle, one technique is to skip displaying of a game image to achieve a constant game speed.

It should be appreciated that the target frames per second may be more or less than 25 frames per second (e.g., 60 frames per second); however, it may be desired that the game data processing function 22 and the game rendering function 24 be performed not less than 20 to 25 times per second so that the human eye won't notice any lag in the rendering of the game image frames. Naturally, the higher the frame rate, the less time between images and the more powerful the processor(s) required to execute the game loop, hence the reliance on specialized processor such as GPUs.

In other embodiments, the game data processing function 22 and the game rendering function 24 may be executed in separate game loops and hence by independent processes. In such cases, the game data processing function 22 may be routinely performed at a specific rate (i.e., a specific number of updates per second) regardless of when the game rendering function 24 is performed and the game rendering function 24 may be routinely performed at a specific rate (i.e., a specific number of frames per second) regardless of when the game data processing function 22 is performed.

It should be appreciated that the process of routinely performing the game data processing function 22 and the game rendering function 24 may be implemented according to various techniques within the purview of the person skilled in the art and that the techniques described in this document are non-limiting examples of how the game data processing function 22 and the game rendering function 24 may be performed.

When the game data processing function 22 is performed, the player input received by the input/output module 15 via the controller 3 (if any) and the game data 34 is processed. More specifically, as the player 7 plays the video game, the player 7 inputs various commands via the game controller 3 such as move left, move right, jump, shoot, to name a few examples. In response to the player input, the game data processing function 22 may update the game data 34. In other words, the object data 42, level data 44 and/or character data 46 may be updated in response to player input via the game controller 3. It should be appreciated that not every time that the game data processing function 22 is performed will there be player input via the game controller 3. Regardless of whether player input is received, the game data 34 is processed and may be updated. Such updating of the game data 34 may be in response to representations and/or attributes of the object data 42, level data 44 and/or character data 46 as the representations and/or attributes may specify updates to the game data 34. For example, timer data may specify one or more timers (e.g., elapsed time, time since a particular event, virtual time of day, etc.), which may cause the game data 34 (e.g., the object data 42, level data 44 and/or character data 46) to be updated. By way of another example, objects not controlled by the player 7 may collide (bounce off, merge, shatter, etc.), which may cause the game data 34 e.g., the object data 42, level data 44 and/or character data 46 to be updated in response to a collision.

In general the game data 34 (e.g., the representations and/or attributes of the objects, levels, and/or characters) represents data that specifies a three-dimensional (3D) graphics scene of the game. The process of converting a three-dimensional (3D) graphics scene, which may include one or more 3D graphics objects, into two-dimensional (2D) rasterized game image for display on the display device 5 is generally referred to as rendering. Figure 2C illustrates an example process of converting a 3D graphics scene to a game image for display on the display device 5 via the screen. At step 52, the game data processing function 22 processes the data that represents the three-dimensional (3D) graphics scene of the game and converts this data into a plurality of vertex data. The vertex data is suitable for processing by a rendering pipeline 55 (also known as a graphics pipeline). At step 55, the game rendering function 24 processes the vertex according to the rendering pipeline 55. The output of the rendering pipeline 55 is typically pixels for display on the display device 5 via the screen, step 60.

More specifically, at step 52, the 3D graphics objects in the graphics scene may be subdivided into one or more 3D graphics primitives. A primitive may refer to a group of one or more vertices that are grouped together and/or connected to define a geometric entity (e.g., point, line, polygon, surface, object, patch, etc.) for rendering. For each of the 3D graphics primitives, vertex data is generated at this step. The vertex data of each primitive may include one or more attributes (e.g., position, the color, normal or texture coordinate information, etc.). In deriving the vertex data, a camera transformation (e.g., rotational transformations) may occur to transform the 3D graphics objects in the 3D graphics scene to the current view or camera angle. Also, in deriving the vertex data, light source data (e.g., direction, position, color and/or intensity) may be taken into consideration. The vertex data derived at this step is typically an ordered list of vertices to be send to the rendering pipeline 55. The format of the ordered list typically depends on the specific implementation of the rendering pipeline 55.

At step 55, the game rendering function 24 processes the vertex data according to the rendering pipeline 55. Rendering pipelines are known in the art (e.g., OpenGl, DirectX, etc.); regardless of the specific rendering pipeline used to implement the rendering pipeline 55, the general process of the rendering pipeline 55 is to create a 2D raster representation (e.g., pixels) of a 3D scene. The rendering pipeline 55, in general, calculates the projected position of the vertex data into two-dimensional (2D) screen space and performs various processing which may take into consideration lighting, colour, position information, texture coordinates and/or any other suitable process to derive the game image (e.g., pixels) for output on the display 5 (step 60).

In some cases, the game apparatus 1 is distributed between a server on the internet and one or more internet appliances. Plural players may therefore participate in the same online game, and the functionality of the game program (the game rendering function and/or the game data processing function) may be executed at least in part by the server.

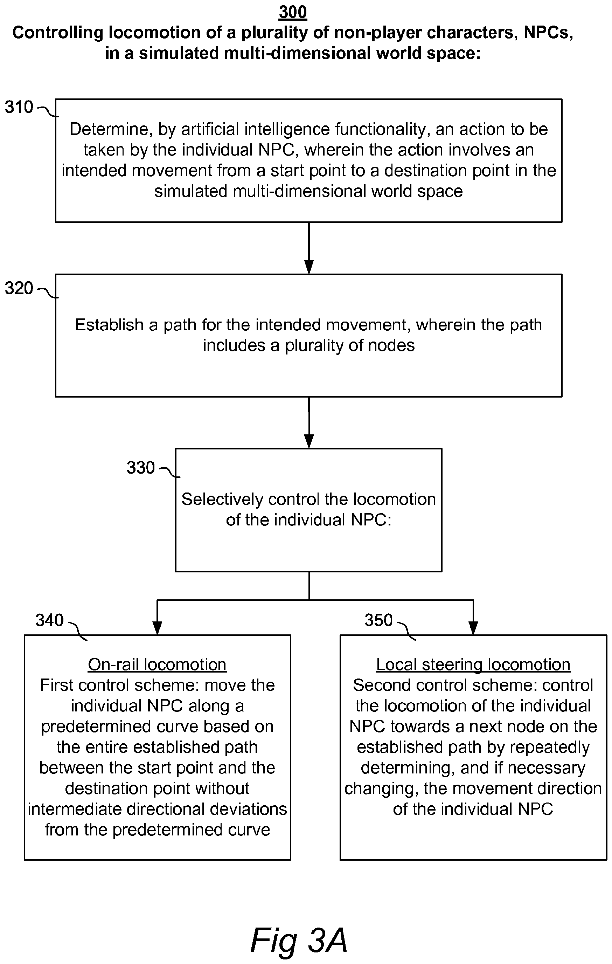

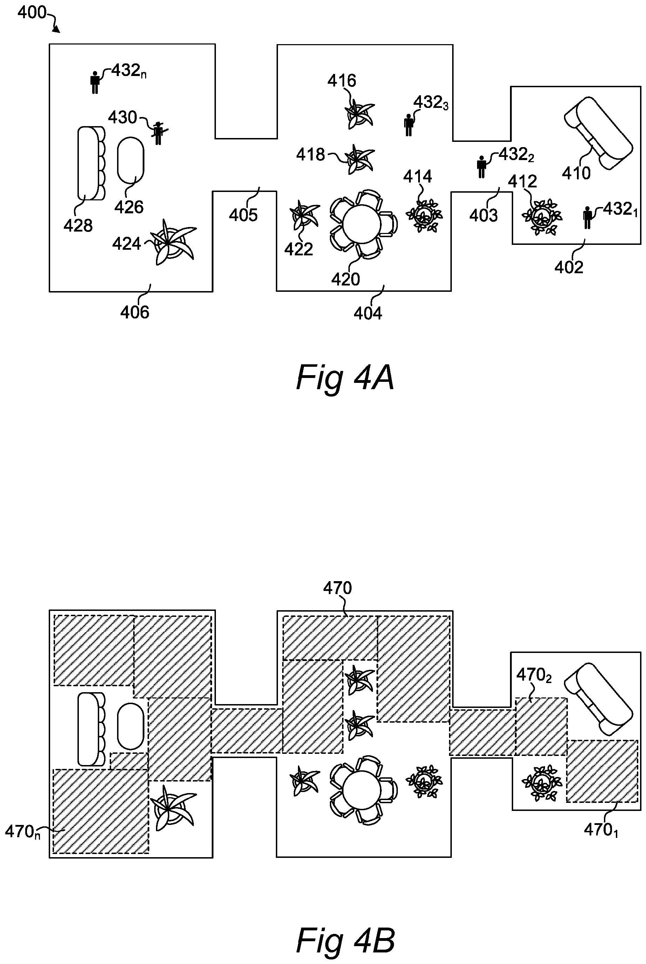

An embodiment of the game data processing function 24 may implement a computer-implemented method for controlling locomotion of a plurality of non-player characters, NPCs, in a simulated multi-dimensional world space. The computer-implemented method is seen as 300 in Figure 3A, and a plurality of NPCs are seen at 432₁-432ₙ in Figures 4A, 5A-C, and 6. This will now be described in greater detail.

Figure 4A illustrates a current level 400 of a simulated multi-dimensional world space which may be the subject of a game executed by the aforementioned game apparatus 2. In the example seen in Figure 4A, the current level 400 comprises a first room 402, a second room 404 and a third room 406. Hallways 403 and 405 connect the rooms 402, 404, 406. It is to be noticed that the illustration in Figure 4A is of an exemplifying and simplifying nature rather than a realistic; in reality a level is much larger and more complex, and it is rather three-dimensional than plainly two-dimensional like in Figure 4A.

A player-controlled character 430 is located in the third room 406, next to a table 426 and couch 428. The plurality of NPCs 432₁-432ₙ are distributed across the rooms 402, 404, 406: a first NPC 432₁ is located in the first room 402, a second NPC 432₂ is located in the hallway 403, a third NPC 432₃ is located in the second room 404, and a fourth NPC 432ₙ is located in the third room 406, near the player-controlled character 430.

As seen in Figure 4A, there are a plurality of objects 410, 412, 414, 416, 418, 420, 422, 424, 426 and 428 that occupy parts of the current level 400. These objects will constitute obstacles that prevent the NPCs 432₁-432ₙ and the player-controlled character 430 from passing straight through them.

To this end, and as illustrated in Figure 4B, the game data 34 comprises a navigation mesh 470. The navigation mesh 470 represents connectivity information defining which parts of the current level 400 are traversable by a character, and how these parts are interconnected. The navigation mesh 470 contains a graph of interconnected two-dimensional convex polygons 470₁-470ₙ. In Figure 4B these polygons are shown as rectangles; other polygonal shapes may be used depending on implementation.

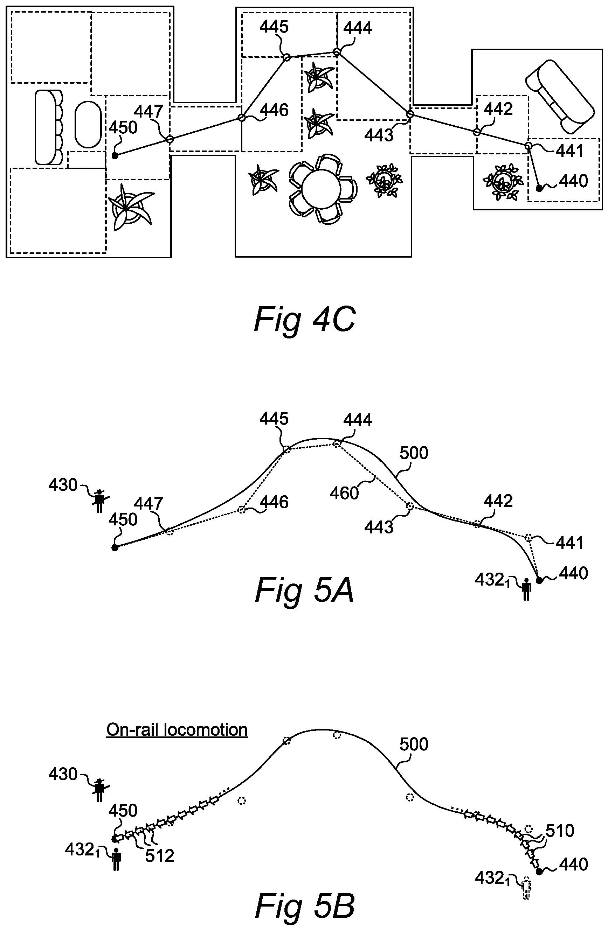

Reference is now made to the computer-implemented method 300 for controlling locomotion of a plurality of non-player characters in Figure 3A. Starting at a step 310, artificial intelligence functionality being part of the game program 33 determines an action to be taken by an individual NPC. To facilitate the description, it is assumed that the individual NPC is the first NPC 432₁ seen in Figure 4A. The action involves an intended movement from a start point to a destination point in the simulated multi-dimensional world space. Again, to facilitate the description, it is assumed that the start point of the intended movement is at 440 in Figure 4C, i.e. right where the first NPC 432₁ is located in the situation in Figure 4A. Also, it is assumed that the destination point of the intended movement is at 450 in Figure 4C, i.e. close to the location of the player-controlled character 430.

Then, in a second step 320 in Figure 3A, a path 460 is established for the intended movement of the first NPC 432₁ between the start point 440 and the destination point 450. Typically, and as seen in Figure 5A, the path 460 established in the establishing step 320 comprises the start point 440 as a first node, the destination point 450 as a last node, and one or more intermediate nodes 441-447 in between. However, in some embodiments or in some situations, the path 460 established in the establishing step 320 comprises only the start point 440 as a first node 440 and the destination point 450 as a last node 450 without any intermediate nodes; this may for instance be the case when the intended movement only amounts to a short distance, or when the local environment in the current level 400 is open space without any obstacles in the way.

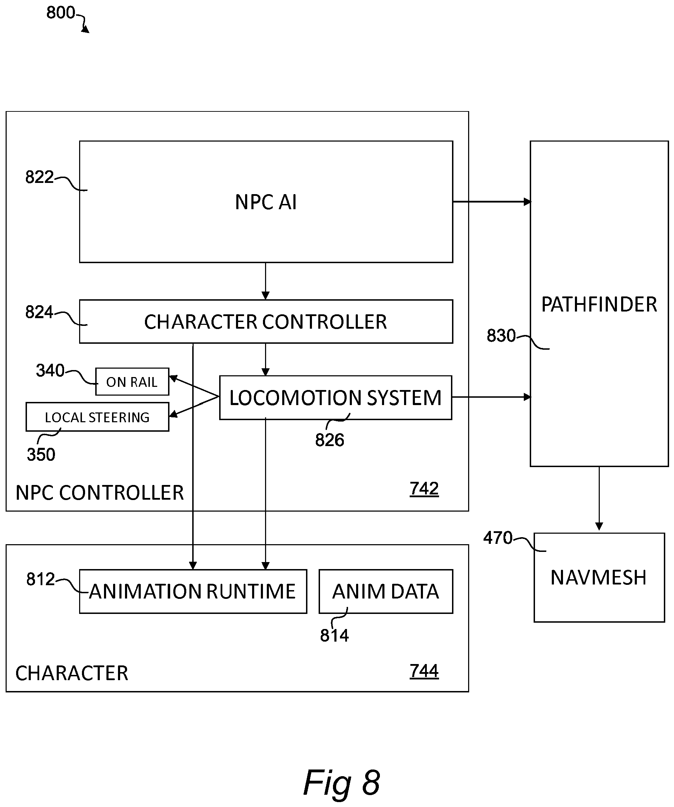

The establishing step 320 investigates the navigation mesh 470 to determine whether the end position 450 is reachable from the start position 440 at the current level 500 of the simulated multi-dimensional world space. If so, the path 460 is established by traversing the graph from the start position 440 to the end position 450 according to a pathfinding algorithm (provided by a pathfinder module 830 in Figure 8), and successively determining the intermediate nodes 441-447 of the path 460 as respective intersections between successive ones of the polygons 470₁-470ₙ of the graph.

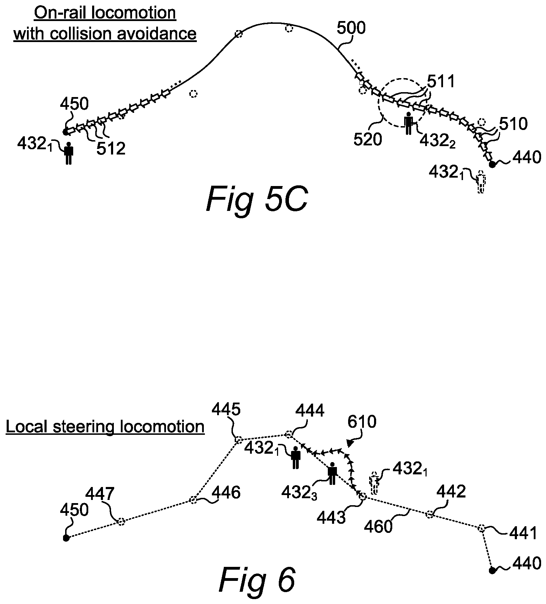

The method in Fig 3A then proceeds with a step 330, in which the locomotion of the individual NPC 432₁ is selectively controlled by either a first control scheme 340 or a second control scheme 350. These two different control schemes for NPC locomotion will be described in more detail with reference to Figures 5A-C and 6.

The first control scheme 340, which is referred to as "on-rail locomotion" throughout this document, involves moving the individual NPC 432₁ along a predetermined curve 500 which is based on the entire established path 460 between the start point 440 and the destination point 450 without intermediate directional deviations from the predetermined curve. As indicated by a plurality of arrows 510 in Figure 5A, the individual NPC 432₁ starts at or near the start point 440 and moves along the predetermined curve 500 without directional deviations from it, all the way past each intermediate node 441-447 so as to arrive at or near the destination point 450, as is shown by a plurality of arrows 512, still without directional deviations from the predetermined curve 500.

More specifically, in a preferred embodiment, the predetermined curve 500 has one or more curvatures and approximately follows the nodes 440-450 of the established path 460, as is seen in Fig 5A. Hence, the curve 500 can be seen as a smoothened approximation of the geometrical figure formed by interconnecting successive nodes 440-450 of the established path 460 by straight lines. The provision of the curve 500 enhances the player's 7 perception of the NPCs being moved in a natural manner without sharp changes in direction between successive nodes 440-450 of the established path 460.

In alternative embodiments, the predetermined curve 500 has no curvature, i.e. consists of a sequence of interconnected straight lines, the totality of which approximately follows the nodes 440-450 of the established path 460. To still provide an improvement in the player's perception of the NPCs being moved in a natural way rather than an artificial, the number of lines of the predetermined curve 500 with no curvature may be larger than the number of lines between the nodes 440-450 of the established path 460. In other alternative embodiments, allowing simplified implementation at the expense of less natural player perception of NPC locomotion, the predetermined curve 500 may be identical to the established path 460.

Controlling NPC locomotion by the first control scheme 340, on-rail locomotion, in the manner described above for Figures 5A and 5B, is beneficial from several aspects.

Firstly, it will allow the artificial intelligence functionality of the game program 33 to make extremely predicable projections of future NPC locations in the simulated multi-dimensional world space.

Secondly, it will avoid artefacts by guaranteeing that the NPC will never leave the navigation mesh 470.

Thirdly, it is efficient in terms of processing resource utilization, since the calculations of the established path 460 and the predetermined curve 500 are done before the NPC even starts to move along the predetermined curve 500. In effect, therefore, this will hide potential latency in pathfinding for the NPC.

Fourthly, from a developer perspective, the approach is very easy to debug.

However, the present inventor has also realized some drawbacks of using the first control scheme 340, on-rail locomotion, in certain circumstances.

Firstly, when there are a large number of NPCs which are to perform movements concurrently (same game state, triggered by same game events or synchronized game events), there may be difficulties in allocating enough processing resources for establishing the path 460 and determining the curve 500 for all such NPCs at essentially the same time.

Secondly, it may be difficult to handle collision avoidance for such a large number of concurrently moving NPCs.

Thirdly, interference from the player-controlled character 430 with the predetermined curve 500 of any of the concurrently moving NPCs may trigger a need to handle collision avoidance for this NPC, which may in turn cause a chain reaction of collision avoidance handling for other ones of the concurrently moving NPCs; this may cause unnaturally looking NPC behaviors.

In consideration of the above insights, the present inventor has introduced the possibility to switch to the second control scheme 350, which is referred to as "local steering locomotion" throughout this document. As seen in Fig 6, the second control scheme 350 involves controlling the locomotion of the individual NPC 432₁ towards a next node 444 on the established path 460 by repeatedly determining, and if necessary changing, the movement direction 610 of the individual NPC 432₁. Hence, according to the second control scheme 350 and in contrast to the first control scheme 340, the NPC is controlled such that it "tries to be" at a certain location (i.e. the next node 444) by repeatedly determining the movement direction 610 which is appropriate at each occasion (such as at every frame update), rather than being constrained to a predetermined curve having been established before the movement of the NPC even started.

One benefit of the second control scheme 350 is that it will allow more accurate and real-time based control of NPC locomotion in certain situations, such as when the individual NPC 432₁ is near the player-controlled character 430 and therefore is likely visible to the player 7, and/or when the individual NPC 432₁ is likely visible to the player 7 even when not being near the player-controlled character 430, and/or when several NPCs are to perform simultaneous movements towards the same goal, and/or *when there is a collision risk because of interference with other NPCs.

Another benefit of the second control scheme 350 is that it may allow for speed adjustment during local steering locomotion to compensate for premature or belated arrival of an NPC. Hence, during local steering locomotion, the method 300 may advantageously involve temporarily adjusting a speed of movement of the individual NPC 432₁ to compensate for premature or belated arrival of the individual NPC 432₁ at the aforementioned next node 444 on the established path 460, or at the destination point 450.

The second control scheme 350 allows for efficient collision avoidance handling, as is illustrated in Fig 6. As the individual NPC 432₁ moves from a node 443 on the established path 460 towards the next node 444, it may happen that another NPC 432₃ interferes with the movement. Accordingly, the method 300 advantageously involves detecting a risk of collision with another one of the plurality of NPCs 432₁-432ₙ (i.e., the third NPC 432₃ in the situation in Figure 6), and in response changing the movement direction 610 of the individual NPC 432₁ to increase an expected distance to the third NPC 432₃ among the plurality of NPCs 432₁-432ₙ. The risk of collision may, for instance, be detected by determining that the distance between the individual NPC (e.g. NPC 432,) and another NPC (e.g. the third NPC 432₃) is less than a threshold value. Alternatively, the risk of collision may be detected in consideration of the current movement directions and movement speeds of the NPCs to assess whether the NPC movements may interfere with each other. Optionally but advantageously, also the movement speed of the individual NPC 432₁ may be increased in such a situation. Another kind of collision avoidance handling may be provided when the locomotion of the individual NPC 432₁ is controlled by the first control scheme 340. To this end, the method 300 may advantageously involve determining whether another one of the plurality of NPCs 432₁-432ₙ is within a collision range 520 (see Fig 5C) of the individual NPC 432₁. If so, the movement speed of the individual NPC 432₁ along the predetermined curve 500 may be changed in an attempt to avoid collision with the other NPC in question (see the second NPC 432₂ in Fig 5C).

Then, the method 300 may determine whether the aforementioned other NPC (i.e. the second NPC 432₂ in Fig 5C) among the plurality of NPCs 432₁-432ₙ is no longer within the collision range 520 of the individual NPC 432₁. If so, the method 300 may return to normal movement speed of the individual NPC 432₁ along the predetermined curve 500.

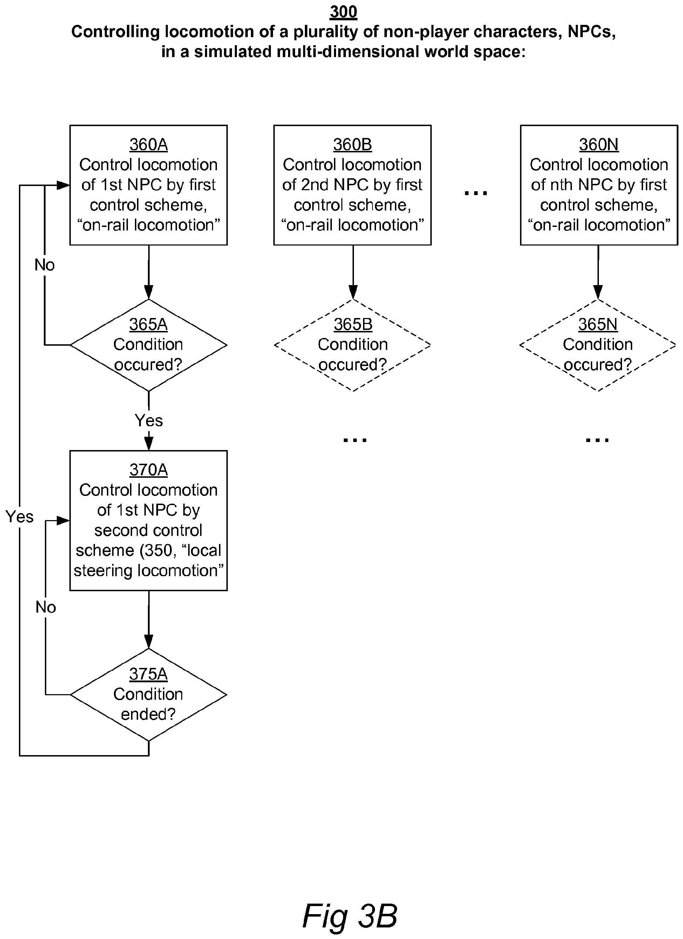

Reference is now made to Figure 3B. As can be seen in this drawing, in an advantageous embodiment, the locomotion of all of the plurality of NPCs 432₁-432ₙ is normally (by default) controlled by the first control scheme 340, on-rail locomotion. This is illustrated as a plurality of parallel control processes, one for each of the NPCs 432₁-432ₙ. In respective first steps 365A-365N of the parallel control processes, the occurrence of one or more conditions for each NPC is monitored for. Beneficial and typical examples of such conditions will be described in more detail later.

When occurrence of such a condition is detected for any of the NPCs, a step 370A switches to the second control scheme 350, local steering locomotion, for that NPC. This is illustrated for the individual NPC 432₁ in Figure 3B. Accordingly, the locomotion of the individual NPC 432₁ is now controlled by the second control scheme 350, like in Figure 6.

The present inventor has identified the following conditions to monitor for in the steps 360A-360N for the respective NPCs 432₁-432ₙ:
1. A distance in the simulated multi-dimensional world space between the individual NPC and the player-controlled character 430 is less than a threshold value. This is seen for the nth NPC 432ₙ in Fig 4A and will allow detecting that the individual NPC 432₁ is near the player-controlled character 430, and that a switch to the second control scheme 350 should be made in order to benefit from the advantages thereof.
2. A distance in the simulated multi-dimensional world space between the individual NPC 432₁ and the player-controlled character 430 is reduced at a rate which exceeds a threshold rate. This will allow faster detection of the individual NPC 432₁ being near the player-controlled character 430, and thus facilitates a timely switch to the second control scheme 350.
3. The individual NPC is in a same local environment in the simulated multi-dimensional world space as the player-controlled character 430. This is seen for the nth NPC 432ₙ in Fig 4A and will make sure that the second control scheme 350 is duly switched to because the individual NPC 432₁ is likely visible to the player 7.
4. The individual NPC is not in the same local environment in the simulated multi-dimensional world space as the player-controlled character 430 but still visible to the player (user) 7. This condition may occur when there are passages of free sight (such as windows, openings, corridors or open fields) between the individual NPC and the player-controlled character 430 even though they are remote from each other. Because of the visibility of the individual NPC, it is appropriate to switch to the second control scheme 350.
5. The determined action to be taken by the individual NPC involves a formation move together with one or more other NPCs among the plurality of NPCs. This may be the situation in Fig 4A when the first NPC 432₁, the second NPC 432₂ and the third NPC 432₃ are all the subject of a common action which involves movement towards the player-controlled character 430. Conveniently, if the formation move involves tracking or following the player-controlled character 430 when it moves, the goal for each involved NPC may be expressed as an offset or relative location with respect to the changing location of the player-controlled character 430.

As seen in Figure 3B, the method advantageously also involves determining in a step 375A that the condition detected for the individual NPC 432₁ in step 365A no longer applies, and in response switching back to the first step 360A and the first control scheme 340, on-rail locomotion, for controlling the locomotion of the individual NPC 432₁ from now on (and possible until a second occurrence of a condition is detected in step 365A). For instance, if it was detected for the individual NPC 432₁ in step 365A that the distance in the simulated multi-dimensional world space between the individual NPC and the player-controlled character 430 was less than a threshold value (i.e., condition number 1 was detected) and, as a result, a switch was made to the second control scheme 350, local steering locomotion, for that individual NPC, then if it subsequently detected in step 375A that the distance between the individual NPC and the player-controlled character 430 has increased and is no longer less than the threshold value, the method will switch back to the first step 360A and the first control scheme 340, on-rail locomotion, for that individual NPC.

Whether the locomotion of the individual NPC 432₁ is controlled by the first control scheme 340, i.e. on-rail locomotion, or the second control scheme 350, i.e. local steering locomotion, the locomotion may typically include providing an animation of the individual NPC 432₁.

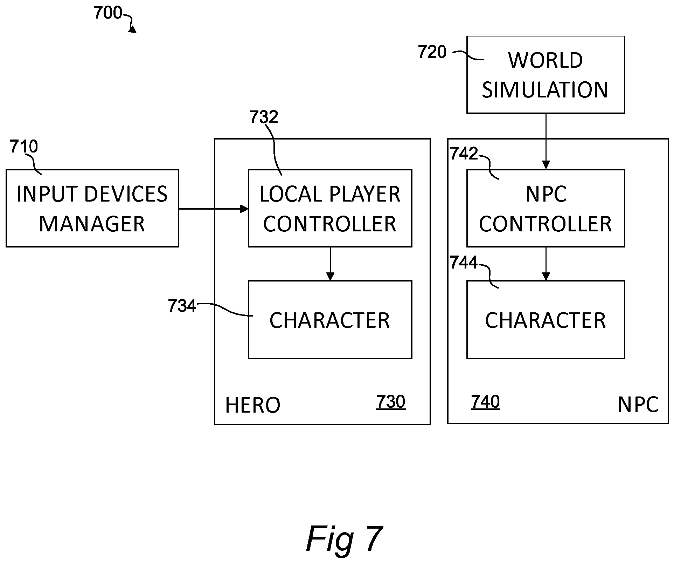

Figure 7 is a high-level software diagram 700 and Figure 8 is a detailed software diagram 800 according to one implementation of the present invention, being part of the game program 33 and game data 34 and being executable by the computing system 2 and game apparatus 1 as referred to earlier with reference to Figure 1.

As is seen in the high-level software diagram 700 in Figure 7, the player-controlled character has a module 730 whereas each NPC has its own instance of an NPC module 740. Both types of modules have in common that they operate on character data 734 and 744, respectively (also see 46 in Fig 2B), but they are driven by different sub-systems.

The player-controlled character module 730 is driven by a local player controller 732 which in turn accepts user input from a input devices manager 710 (part of the input/output module 15 in Figure 1) as received via a physical input device like the game controller 3 in Figure 1. The local player controller 732 converts the user input to actions performable by the player-controlled character.

Each NPC module 740 is driven by an NPC controller 742 from artificial intelligence (Al) code using the current state of the simulated multi-dimensional world space 720 to make decisions about actions to be performed by the respective NPC.

The detailed software diagram 800 in Figure 8 provides internal details about the NPC controller 742 in Fig 7.

The core of the NPC controller 742 is represented by an NPC AI module 822 that makes decisions about what the NPC should do. In order to do this it can use global services (global in the sense that they are shared by all NPCs) to issue queries related to the state of the simulated multi-dimensional world space 720.

In this example, to decide if an area is reachable from the current location of its NPC, the NPC AI module 822 can ask the pathfinder module 830. The pathfinder module 830 will, in turn, use the navigation mesh 470, which as already explained is a piece of game data related to a specific map, containing connectivity information about different areas of a game level.

Once a decision is made, the NPC AI module 822 will ask its character controller 824 to achieve that goal by an associated action (for example, stand still and shoot at the enemy, or run towards that cover and duck).

If no locomotion is needed for the NPC (for instance when the associated action is standing still and shooting), the character controller 824 will simply ask an animation runtime 812 for that character to play a matching animation.

In case locomotion is needed (for instance when the associated action is running towards that cover), the character controller 812 will delegate to a locomotion system 826 to move the NPC.

Internally, the locomotion system 826 selectively uses either of the first and second control schemes 340 and 350 for on-rail locomotion and local steering locomotion, respectively, by performing the functionality described in Figures 3A and 3B and as described above. The selected control scheme provides the direction for the NPC, and the locomotion system 826 then asks the animation runtime 812 to play a matching animation included in animation data 814 (for instance, starting to walk if currently standing, or a walk cycle if already moving).

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A computer-implemented method for controlling locomotion of a plurality of non-player characters (432₁-432ₙ), NPCs, in a simulated multi-dimensional world space, the method (300) comprising, for an individual NPC (432₁) among the plurality of NPCs:
determining (310), by artificial intelligence functionality, an action to be taken by the individual NPC, wherein the action involves an intended movement from a start point (440) to a destination point (450) in the simulated multi-dimensional world space;
establishing (320) a path (460) for the intended movement between the start point and the destination point, wherein the path comprises the start point (440) as a first node (440), the destination point (450) as a last node (450), and one or more intermediate nodes (441-447) in between; and
selectively controlling (330) the locomotion of the individual NPC (432₁) by either a first control scheme (340) or a second control scheme (350), wherein
• the first control scheme (340, "on-rail locomotion") involves moving the individual NPC (432₁) along a predetermined curve (500) which is based on the entire established path between the start point and the destination point without intermediate directional deviations from the predetermined curve, and
• the second control scheme (350, "local steering locomotion") involves controlling the locomotion of the individual NPC (432₁) towards a next node (444) on the established path (460) by repeatedly determining, and if necessary changing, the movement direction (610) of the individual NPC,
wherein the method further involves:
normally controlling (360A-360N) the locomotion of all of the plurality of NPCs (432₁-432ₙ) by the first control scheme (340, "on-rail locomotion");
upon detecting (365A-365N) the occurrence of a condition for an individual NPC (432₁), switching (370A) to the second control scheme (350, "local steering locomotion") for controlling the locomotion of the individual NPC (432₁);
when the locomotion of the individual NPC (432₁) is controlled (370A) by the second control scheme (350, "local steering locomotion"):
determining (375A) that the condition detected for the individual NPC (432₁) no longer applies; and
in response, switching back (360A) to the first control scheme (340, "on-rail locomotion") for controlling the locomotion of the individual NPC (432₁),
wherein the condition is any of the following
• a distance in the simulated multi-dimensional world space between the individual NPC (432ₙ) and a player-controlled character (430) is less than a threshold value;
• a distance in the simulated multi-dimensional world space between the individual NPC and the player-controlled character (430) is reduced at a rate which exceeds a threshold rate;
• the individual NPC (432ₙ) is in a same local environment (406) in the simulated multi-dimensional world space as the player-controlled character (430);
• the individual NPC is not in a same local environment in the simulated multi-dimensional world space as the player-controlled character (430) but still visible to a user (7); and
• the determined action to be taken by the individual NPC (432₁) involves a formation move together with one or more other NPCs (432₂, 432₃) among the plurality of NPCs,
and wherein the method further involves, when the locomotion of the individual NPC (432₁) is controlled by the second control scheme (350, "local steering locomotion"):
detecting a risk of collision with another one of the plurality of NPCs (432₁-432ₙ); and
in response changing the movement direction (610), and optionally also the movement speed, of the individual NPC (432₁) to increase an expected distance to said another one of the plurality of NPCs (432₁-432ₙ).

2. The method as defined in claim 1, wherein the method further involves, when the locomotion of the individual NPC (432₁) is controlled by the second control scheme (350, "local steering locomotion"):
temporarily adjusting a speed of movement of the individual NPC (432₁) to compensate for premature or belated arrival of the individual NPC (432₁) at the aforesaid next node (444) on the established path (460), or at the destination point (450).

3. The method as defined in any preceding claim, wherein the method further involves, when the locomotion of the individual NPC (432₁) is controlled by the first control scheme (340, "on-rail locomotion"):
determining whether another one of the plurality of NPCs (432₁-432ₙ) is within a collision range (520) of the individual NPC (432₁);
if so, changing the movement speed of the individual NPC (432₁) along the predetermined curve (500);
determining whether said another one of the plurality of NPCs (432₁-432ₙ) is no longer within the collision range (520) of the individual NPC (432₁); and
if so, returning to normal movement speed of the individual NPC (432₁) along the predetermined curve (500).

4. The method as defined in any preceding claim, wherein controlling (330) the locomotion of the individual NPC (432₁) by the first control scheme (340, "on-rail locomotion") and the second control scheme (350, "local steering locomotion") includes providing an animation of the individual NPC (432₁).

5. The method as defined in any preceding claim, wherein the establishing step (320) comprises:
investigating a navigation mesh (470) to determine whether the end position (450) is reachable from the start position (440) at a current level (400) of the simulated multi-dimensional world space, the navigation mesh (470) containing a graph of interconnected two-dimensional convex polygons (470₁-470ₙ) of the current level (500); and
if so, establishing the path (460) by traversing the graph from the start position (440) to the end position (450) according to a pathfinding algorithm (830) and successfully determining the nodes of the path (460) as respective intersections between successive polygons of the graph.

6. The method as defined any preceding claim, wherein the predetermined curve (500) has one or more curvatures and approximately follows the nodes (440-450) of the established path (460).

7. The method as defined any of claims 1-5, wherein the predetermined curve (500) has no curvature and approximately follows the nodes (440-450) of the established path (460)

8. The method as defined any of claims 1-5, wherein the predetermined curve (500) is identical to the established path (460).

9. A system (1) for controlling locomotion of a plurality of non-player characters (432₁-432ₙ), NPCs, in a simulated multi-dimensional world space, the system comprising:
a processor (10); and
a memory (11) for storing information for simulating a multi-dimensional world space,
wherein the processor is configured, for an individual NPC (432₁) among the plurality of NPCs, to:
determine (310), by artificial intelligence functionality, an action to be taken by the individual NPC, wherein the action involves an intended movement from a start point (440) to a destination point (450) in the simulated multi-dimensional world space;
establish (320) a path (460) for the intended movement between the start point and the destination point, wherein the path comprises the start point (440) as a first node (440), the destination point (450) as a last node (450), and one or more intermediate nodes (441-447) in between; and
selectively control (330) the locomotion of the individual NPC (432₁) by either a first control scheme (340) or a second control scheme (350),
wherein
• the first control scheme (340, "on-rail locomotion") involves moving the individual NPC (432₁) along a predetermined curve (500) which is based on the entire established path between the start point and the destination point without intermediate directional deviations from the predetermined curve, and
• the second control scheme (350, "local steering locomotion") involves controlling the locomotion of the individual NPC (432₁) towards a next node (444) on the established path (460) by repeatedly determining, and if necessary changing, the movement direction (610) of the individual NPC,
wherein the processor is further configured to:
normally controlling (360A-360N) the locomotion of all of the plurality of NPCs (432₁-432ₙ) by the first control scheme (340, "on-rail locomotion");
upon detecting (365A-365N) the occurrence of a condition for an individual NPC (432₁), switching (370A) to the second control scheme (350, "local steering locomotion") for controlling the locomotion of the individual NPC (432₁);
when the locomotion of the individual NPC (432₁) is controlled (370A) by the second control scheme (350, "local steering locomotion"):
determining (375A) that the condition detected for the individual NPC (432₁) no longer applies; and
in response, switching back (360A) to the first control scheme (340, "on-rail locomotion") for controlling the locomotion of the individual NPC (432₁),
wherein the condition is any of the following
• a distance in the simulated multi-dimensional world space between the individual NPC (432ₙ) and a player-controlled character (430) is less than a threshold value;
• a distance in the simulated multi-dimensional world space between the individual NPC and the player-controlled character (430) is reduced at a rate which exceeds a threshold rate;
• the individual NPC (432ₙ) is in a same local environment (406) in the simulated multi-dimensional world space as the player-controlled character (430);
• the individual NPC is not in a same local environment in the simulated multi-dimensional world space as the player-controlled character (430) but still visible to a user (7); and
• the determined action to be taken by the individual NPC (432₁) involves a formation move together with one or more other NPCs (432₂, 432₃) among the plurality of NPCs,
and when the locomotion of the individual NPC (432₁) is controlled by the second control scheme (350, "local steering locomotion"):
detecting a risk of collision with another one of the plurality of NPCs (432₁-432ₙ); and
in response changing the movement direction (610), and optionally also the movement speed, of the individual NPC (432₁) to increase an expected distance to said another one of the plurality of NPCs (432₁-432ₙ).

10. The system as defined in claim 9, wherein the processor (10) is further configured to perform the functions defined for the method in any of claims 2-8.

11. A game apparatus (1), comprising
an input/output interface (15) allowing a user (7) to control game inputs and perceive game outputs; and
a system (1) as defined in claim 9 or 10.

12. A computer-readable medium comprising computer readable instructions which, when executed by a computing device, such as a processor (10), are configured to cause the computing device to perform the functions defined for the method in any of claims 1-8.

## Patentansprüche

1. Computerimplementiertes Verfahren zum Steuern einer Fortbewegung mehrerer Nicht-Spieler-Figuren (432₁-432ₙ), NPC, in einem simulierten mehrdimensionalen Weltraum, wobei das Verfahren (300) umfasst, für eine individuelle NPC (432₁) unter den mehreren NPC:
Bestimmen (310) durch eine Funktionalität künstlicher Intelligenz einer Handlung, die von der individuellen NPC vorzunehmen ist, wobei die Handlung eine beabsichtigte Bewegung von einem Startpunkt (440) zu einem Zielpunkt (450) in dem simulierten mehrdimensionalen Weltraum beinhaltet,
Einrichten (320) eines Wegs (460) für die beabsichtigte Bewegung zwischen dem Startpunkt und dem Zielpunkt, wobei der Weg den Startpunkt (440) als einen ersten Knoten (440), den Zielpunkt (450) als einen letzten Knoten (450) und einen oder mehrere Zwischenknoten (441-447) dazwischen umfasst; und
wahlweise Steuern (330) der Fortbewegung der individuellen NPC (432₁) durch entweder ein erstes Steuerschema (340) oder ein zweites Steuerschema (350), wobei
- das erste Steuerschema (340, "Fortbewegung auf Schienen") beinhaltet, die individuelle NPC (432₁) entlang einer vorgegebenen Kurve (500), die auf dem gesamten eingerichteten Weg zwischen dem Startpunkt und dem Zielpunkt beruht, ohne dazwischenliegende Richtungsabweichungen von der vorgegebenen Kurve zu bewegen, und
- das zweite Steuerschema (350, "Fortbewegung mit lokaler Lenkung") beinhaltet, die Fortbewegung der individuellen NPC (432₁) in Richtung eines nächsten Knotens (444) auf dem eingerichteten Weg (460) durch wiederholtes Bestimmen und wenn nötig Ändern der Bewegungsrichtung (610) der individuellen NPC zu steuern,
wobei das Verfahren ferner beinhaltet:
normales Steuern (360A-360N) der Fortbewegung aller der mehreren NPC (432₁-432ₙ) durch das erste Steuerschema (340, "Fortbewegung auf Schienen");
bei Detektieren (365A-365N) des Auftretens einer Bedingung für eine individuelle NPC (432₁) Wechseln (370A) zu dem zweiten Steuerschema (350, "Fortbewegung mit lokaler Lenkung") zum Steuern der Fortbewegung der individuellen NPC (432₁);
dann, wenn die Fortbewegung der individuellen NPC (432₁) durch das zweite Steuerschema (350, "Fortbewegung mit lokaler Lenkung") gesteuert wird:
Bestimmen (375A), dass die Bedingung, die für die individuelle NPC (432₁) detektiert wird, nicht mehr gilt; und
als Reaktion Zurückwechseln (360A) zu dem ersten Steuerschema (340, "Fortbewegung auf Schienen") zum Steuern der Fortbewegung der individuellen NPC (432₁),
wobei die Bedingung eine der Folgenden ist:
- ein Abstand in dem simulierten mehrdimensionalen Weltraum zwischen der individuellen NPC (432₁) und einer spielergesteuerten Figur (430) ist kleiner als ein Schwellenwert;
- ein Abstand in dem simulierten mehrdimensionalen Weltraum zwischen der individuellen NPC und der spielergesteuerten Figur (430) wird mit einer Rate verringert, die eine Schwellenrate übersteigt;
- die individuelle NPC (432ₙ) ist in derselben lokalen Umgebung (406) in dem simulierten mehrdimensionalen Weltraum wie die spielergesteuerte Figur (430);
- die individuelle NPC ist nicht in derselben lokalen Umgebung in dem simulierten mehrdimensionalen Weltraum wie die spielergesteuerte Figur (430), aber noch sichtbar für einen Anwender (7); und
- die bestimmte von der individuellen NPC (432₁) vorzunehmende Handlung beinhaltet eine Formationsbewegung zusammen mit einer oder mehreren anderen NPC (432₂-432₃) unter den mehreren NPC,
und wobei das Verfahren ferner beinhaltet, dann, wenn die Fortbewegung der individuellen NPC (432₁) durch das zweite Steuerschema (350, "Fortbewegung mit lokaler Lenkung") gesteuert wird:
Detektieren eines Risikos eines Zusammenstoßes mit einer anderen der mehreren NPC (432₁-432ₙ); und
als Reaktion Ändern der Bewegungsrichtung (610) und wahlweise auch der Bewegungsgeschwindigkeit der individuellen NPC (432₁), um einen erwarteten Abstand zu der anderen der mehreren NPC (432₁-432ₙ) zu erhöhen.

2. Verfahren nach Anspruch 1, wobei das Verfahren ferner beinhaltet, dann, wenn die Fortbewegung der individuellen NPC (432₁) durch das zweite Steuerschema (350, "Fortbewegung mit lokaler Lenkung") gesteuert wird:
vorläufiges Anpassen einer Bewegungsgeschwindigkeit der individuellen NPC (432₁), um eine vorschnelle oder verspätete Ankunft der individuellen NPC (432₁) an dem oben erwähnten nächsten Knoten (444) auf dem eingerichteten Weg (460) oder an dem Zielpunkt (450) zu kompensieren.

3. Verfahren nach einem vorhergehenden Anspruch, wobei das Verfahren ferner beinhaltet, dann, wenn die Fortbewegung der individuellen NPC (432₁) durch das erste Steuerschema (340, "Fortbewegung auf Schienen") gesteuert wird:
Bestimmen, ob eine andere der mehreren NPC (432₁-432ₙ) innerhalb einer Zusammenstoßreichweite (520) der individuellen NPC (432₁) ist;
wenn dem so ist, Ändern der Bewegungsgeschwindigkeit der individuellen NPC (432₁) entlang der vorgegebenen Kurve (500);
Bestimmen, ob die andere der mehreren NPC (432₁-432ₙ) nicht länger innerhalb der Zusammenstoßreichweite (520) der individuellen NPC (432₁) ist; und
wenn dem so ist, Zurückkehren zu einer normalen Bewegungsgeschwindigkeit der individuellen NPC (432₁) entlang der vorgegebenen Kurve (500).

4. Verfahren nach einem vorhergehenden Anspruch, wobei das Steuern (330) der Fortbewegung der individuellen NPC (432₁) durch das erste Steuerschema (340, "Fortbewegung auf Schienen") und das zweite Steuerschema (350, "Fortbewegung mit lokaler Lenkung") enthält, eine Animation der individuellen NPC (432₁) bereitzustellen.

5. Verfahren nach einem vorhergehenden Anspruch, wobei der Einrichtungsschritt (320) umfasst:
Untersuchen eines Navigationsnetzes (470), um zu bestimmen, ob die Endposition (450) von der Startposition (440) auf einem aktuellen Niveau (400) des simulierten mehrdimensionalen Weltraums erreichbar ist, wobei das Navigationsnetz (470) einen Grafen verbundener zweidimensionaler konvexer Polygone (470₁-470ₙ) des aktuellen Niveaus (500) umfasst; und
wenn dem so ist, Einrichten des Wegs (460) durch Durchqueren des Grafen von der Startposition (440) zu der Endposition (450) gemäß einem Wegfindungsalgorithmus (830) und erfolgreich Bestimmen der Knoten des Wegs (460) als jeweilige Kreuzungen zwischen aufeinanderfolgenden Polygonen des Grafen.

6. Verfahren nach einem vorhergehenden Anspruch, wobei die vorgegebene Kurve (500) eine oder mehrere Krümmungen besitzt und ungefähr den Knoten (440-450) des eingerichteten Wegs (460) folgt.

7. Verfahren nach einem der Ansprüche 1-5, wobei die vorgegebene Kurve (500) keine Krümmung besitzt und ungefähr den Knoten (440-450) des eingerichteten Wegs (460) folgt.

8. Verfahren nach einem der Ansprüche 1-5, wobei die vorgegebene Kurve (500) mit dem eingerichteten Weg (460) identisch ist.

9. System (1) zum Steuern einer Fortbewegung mehrerer Nicht-Spieler-Figuren (432₁-432ₙ), NPC, in einem simulierten mehrdimensionalen Weltraum, wobei das System umfasst:
einen Prozessor (10); und
einen Speicher (11) zum Speichern von Informationen zum Simulieren eines mehrdimensionalen Weltraums,
wobei der Prozessor konfiguriert ist, für eine individuelle NPC (432₁) unter den mehreren NPC zum:
Bestimmen (310) durch eine Funktionalität künstlicher Intelligenz einer Handlung, die von der individuellen NPC vorzunehmen ist, wobei die Handlung eine beabsichtigte Bewegung von einem Startpunkt (440) zu einem Zielpunkt (450) in dem simulierten mehrdimensionalen Weltraum beinhaltet,
Einrichten (320) eines Wegs (460) für die beabsichtigte Bewegung zwischen dem Startpunkt und dem Zielpunkt, wobei der Weg den Startpunkt (440) als einen ersten Knoten (440), den Zielpunkt (450) als einen letzten Knoten (450) und einen oder mehrere Zwischenknoten (441-447) dazwischen umfasst; und
wahlweise Steuern (330) der Fortbewegung der individuellen NPC (432₁) durch entweder ein erstes Steuerschema (340) oder ein zweites Steuerschema (350), wobei
- das erste Steuerschema (340, "Fortbewegung auf Schienen") beinhaltet, die individuelle NPC (432₁) entlang einer vorgegebenen Kurve (500), die auf dem gesamten eingerichteten Weg zwischen dem Startpunkt und dem Zielpunkt beruht, ohne dazwischenliegende Richtungsabweichungen von der vorgegebenen Kurve zu bewegen, und
- das zweite Steuerschema (350, "Fortbewegung mit lokaler Lenkung") beinhaltet, die Fortbewegung der individuellen NPC (432₁) in Richtung eines nächsten Knotens (444) auf dem eingerichteten Weg (460) durch wiederholtes Bestimmen und wenn nötig Ändern der Bewegungsrichtung (610) der individuellen NPC zu steuern,
wobei der Prozessor ferner konfiguriert ist zum:
normalen Steuern (360A-360N) der Fortbewegung aller der mehreren NPC (432₁-432ₙ) durch das erste Steuerschema (340, "Fortbewegung auf Schienen");
bei Detektieren (365A-365N) des Auftretens einer Bedingung für eine individuelle NPC (432₁) Wechseln (370A) zu dem zweiten Steuerschema (350, "Fortbewegung mit lokaler Lenkung") zum Steuern der Fortbewegung der individuellen NPC (432₁);
dann, wenn die Fortbewegung der individuellen NPC (432₁) durch das zweite Steuerschema (350, "Fortbewegung mit lokaler Lenkung") gesteuert wird:
Bestimmen (375A), dass die Bedingung, die für die individuelle NPC (432₁) detektiert wird, nicht mehr gilt; und
als Reaktion Zurückwechseln (360A) zu dem ersten Steuerschema (340, "Fortbewegung auf Schienen") zum Steuern der Fortbewegung der individuellen NPC (432₁),
wobei die Bedingung eine der folgenden ist:
- ein Abstand in dem simulierten mehrdimensionalen Weltraum zwischen der individuellen NPC (432₁) und einer spielergesteuerten Figur (430) ist kleiner als ein Schwellenwert;
- ein Abstand in dem simulierten mehrdimensionalen Weltraum zwischen der individuellen NPC und der spielergesteuerten Figur (430) wird mit einer Rate verringert, die eine Schwellenrate übersteigt;
- die individuelle NPC (432ₙ) ist in derselben lokalen Umgebung (406) in dem simulierten mehrdimensionalen Weltraum wie die spielergesteuerte Figur (430);
- die individuelle NPC ist nicht in derselben lokalen Umgebung in dem simulierten mehrdimensionalen Weltraum wie die spielergesteuerte Figur (430), aber noch sichtbar für einen Anwender (7); und
- die bestimmte von der individuellen NPC (432₁) vorzunehmende Handlung beinhaltet eine Formationsbewegung zusammen mit einer oder mehreren anderen NPC (432₂-432₃) unter den mehreren NPC,
und dann, wenn die Fortbewegung der individuelle NPC (432₁) durch das zweite Steuerschema (350, "Fortbewegung mit lokaler Lenkung") gesteuert wird:
Detektieren eines Risikos eines Zusammenstoßes mit einer anderen der mehreren NPC (432₁-432ₙ); und
als Reaktion Ändern der Bewegungsrichtung (610) und wahlweise auch der Bewegungsgeschwindigkeit der individuellen NPC (432₁), um einen erwarteten Abstand zu der anderen der mehreren NPC (432₁-432ₙ) zu erhöhen.

10. System nach Anspruch 9, wobei der Prozessor (10) ferner konfiguriert ist, die für das Verfahren nach einem der Ansprüche 2-8 definierten Funktionen auszuführen.

11. Spielvorrichtung (1), die umfasst:
eine Eingabe-/Ausgabe-Schnittstelle (15), die einem Anwender (7) erlaubt, Steuerspieleingaben zu steuern und Spielausgaben wahrzunehmen; und
ein System (1) nach Anspruch 9 oder 10.

12. Computerlesbares Medium, das computerlesbare Anweisungen umfasst, die dann, wenn sie durch eine Rechenvorrichtung, wie etwa einen Prozessor (10) ausgeführt werden, konfiguriert sind, zu bewirken, dass die Rechenvorrichtung die für das Verfahren nach einem der Ansprüche 1-8 definierten Funktionen ausführt.

## Revendications

1. Procédé mis en oeuvre par ordinateur pour commander la locomotion d'une pluralité de personnages non joueurs (432₁-432ₙ), PNJ, dans un espace multidimensionnel de monde simulé, le procédé (300) comprenant, pour un PNJ (432₁) individuel parmi la pluralité de PNJ :
la détermination (310), par une fonctionnalité d'intelligence artificielle, d'une action à entreprendre par le PNJ individuel, dans lequel l'action implique un mouvement prévu d'un point de départ (440) à un point de destination (450) dans l'espace multidimensionnel de monde simulé ;
l'établissement (320) d'un trajet (460) pour le mouvement prévu entre le point de départ et le point de destination, dans lequel le trajet comprend le point de départ (440) en tant que premier noeud (440), le point de destination (450) en tant que dernier noeud (450), et un ou plusieurs noeuds intermédiaires (441-447) entre ceux-ci ; et
la commande sélective (330) de la locomotion du PNJ (432₁) individuel soit par un premier schéma de commande (340) soit par un second schéma de commande (350), dans lequel
• le premier schéma de commande (340, « locomotion sur rail ») implique le déplacement du PNJ (432₁) individuel le long d'une courbe (500) prédéterminée qui est basée sur le trajet établi entier entre le point de départ et le point de destination sans écarts directionnels intermédiaires par rapport à la courbe prédéterminée, et
• le second schéma de commande (350, « locomotion à pilotage local ») implique la commande de la locomotion du PNJ (432₁) individuel vers un noeud (444) suivant sur le trajet (460) établi par détermination répétée, et si nécessaire changement, de la direction de mouvement (610) du PNJ individuel, dans lequel le procédé implique en outre :
la commande (360A-360N) normale de la locomotion de l'ensemble de la pluralité de PNJ (432₁-432ₙ) par le premier schéma de commande (340, « locomotion sur rail ») ;
lors de la détection (365A-365N) de l'occurrence d'une condition pour un PNJ (432₁) individuel, la commutation (370A) vers le second schéma de commande (350, « locomotion à pilotage local ») pour commander la locomotion du PNJ (432₁) individuel ;
lorsque la locomotion du PNJ (432₁) individuel est commandée (370A) par le second schéma de commande (350, « locomotion à pilotage local ») :
la détermination (375A) que la condition détectée pour le PNJ (432₁) individuel ne s'applique plus ; et
en réponse, le retour (360A) au premier schéma de commande (340, « locomotion sur rail ») pour commander la locomotion du PNJ (432₁) individuel, dans lequel la condition est l'une quelconque des suivantes
• une distance dans l'espace multidimensionnel de monde simulé entre le PNJ individuel (432ₙ) et un personnage commandé par un joueur (430) est inférieure à une valeur de seuil ;
• une distance dans l'espace multidimensionnel de monde simulé entre le PNJ individuel et le personnage commandé par le joueur (430) est réduite à un rythme qui dépasse un rythme de seuil ;
• le PNJ individuel (432ₙ) est dans un même environnement local (406) dans l'espace multidimensionnel de monde simulé que le personnage commandé par le joueur (430) ;
• le PNJ individuel n'est pas dans un même environnement local dans l'espace multidimensionnel de monde simulé que le personnage commandé par le joueur (430) mais est toujours visible par un utilisateur (7) ; et
• l'action déterminée à prendre par le PNJ (432₁) individuel implique un déplacement de formation conjointement avec un ou plusieurs autres PNJ (432₂, 432₃) parmi la pluralité de PNJ,
et dans lequel le procédé implique en outre, lorsque la locomotion du PNJ (432₁) individuel est commandée par le second schéma de commande (350, « locomotion à pilotage local ») :
la détection d'un risque de collision avec un autre de la pluralité de PNJ (432₁-432ₙ) ; et
en réponse le changement de la direction de mouvement (610), et optionnellement également de la vitesse de mouvement, du PNJ (432₁) individuel pour augmenter une distance attendue à un dit autre de la pluralité de PNJ (432₁-432ₙ).

2. Procédé selon la revendication 1, dans lequel le procédé implique en outre, lorsque la locomotion du PNJ (432₁) individuel est commandée par le second schéma de commande (350, « locomotion à pilotage local ») :
l'ajustement temporaire d'une vitesse de mouvement du PNJ (432₁) individuel pour compenser une arrivée prématurée ou retardée du PNJ (432₁) individuel au susmentionné noeud suivant (444) sur le trajet (460) établi, ou au point de destination (450).

3. Procédé selon une quelconque revendication précédente, dans lequel le procédé implique en outre, lorsque la locomotion du PNJ (432₁) individuel est commandée par le premier schéma de commande (340, « locomotion sur rail ») :
de déterminer si un autre de la pluralité de PNJ (432₁-432ₙ) est à l'intérieur d'une plage de collision (520) du PNJ (432₁) individuel ;
si tel est le cas, le changement de la vitesse de mouvement du PNJ (432₁) individuel le long de la courbe (500) prédéterminée ;
de déterminer si ledit un autre de la pluralité de PNJ (432₁-432ₙ) n'est plus à l'intérieur de la plage de collision (520) du PNJ (432₁) individuel ; et
si tel est le cas, le retour à la vitesse de mouvement normale du PNJ (432₁) individuel le long de la courbe (500) prédéterminée.

4. Procédé selon une quelconque revendication précédente, dans lequel la commande (330) de la locomotion du PNJ (432₁) individuel par le premier schéma de commande (340, « locomotion sur rail ») et le second schéma de commande (350, « locomotion à pilotage local ») comporte la fourniture d'une animation du PNJ (432₁) individuel.

5. Procédé selon une quelconque revendication précédente, dans lequel l'étape d'établissement (320) comprend :
l'examen d'un maillage de navigation (470) pour déterminer si la position finale (450) peut être atteinte à partir de la position de départ (440) à un niveau courant (400) de l'espace multidimensionnel de monde simulé, le maillage de navigation (470) contenant un graphe de polygones convexes bidimensionnels interconnectés (470₁-470ₙ) du niveau courant (500) ; et
si tel est le cas, l'établissement du trajet (460) en traversant le graphe de la position de départ (440) à la position finale (450) selon un algorithme de recherche de chemin (830) et la détermination réussie des noeuds du chemin (460) en tant qu'intersections respectives entre des polygones successifs du graphique.

6. Procédé selon une quelconque revendication précédente, dans lequel la courbe (500) prédéterminée a une ou plusieurs courbures et suit approximativement les noeuds (440-450) du trajet (460) établi.

7. Procédé selon l'une quelconque des revendications 1 à 5, dans lequel la courbe (500) prédéterminée n'a pas de courbure et suit approximativement les noeuds (440-450) du trajet (460) établi.

8. Procédé selon l'une quelconque des revendications 1 à 5, dans lequel la courbe (500) prédéterminée est identique au trajet (460) établi.

9. Système (1) pour commander la locomotion d'une pluralité de personnages non joueurs (432₁-432ₙ), PNJ, dans un espace multidimensionnel de monde simulé, le système comprenant :
un processeur (10) ; et
une mémoire (11) pour stocker des informations pour simuler un espace multidimensionnel de monde,
dans lequel le processeur est configuré, pour un PNJ (432₁) individuel parmi la pluralité de PNJ, pour :
déterminer (310), par une fonctionnalité d'intelligence artificielle, une action à entreprendre par le PNJ individuel, dans lequel l'action implique un mouvement prévu d'un point de départ (440) à un point de destination (450) dans l'espace multidimensionnel de monde simulé ;
établir (320) un trajet (460) pour le mouvement prévu entre le point de départ et le point de destination, dans lequel le trajet comprend le point de départ (440) en tant que premier noeud (440), le point de destination (450) en tant que dernier noeud (450), et un ou plusieurs noeuds intermédiaires (441-447) entre ceux-ci ; et
commander (330) sélectivement la locomotion du PNJ (432₁) individuel soit par un premier schéma de commande (340) soit par un second schéma de commande (350), dans lequel
• le premier schéma de commande (340, « locomotion sur rail ») implique le déplacement du PNJ (432₁) individuel le long d'une courbe (500) prédéterminée qui est basée sur le trajet établi entier entre le point de départ et le point de destination sans écarts directionnels intermédiaires par rapport à la courbe prédéterminée, et
• le second schéma de commande (350, « locomotion à pilotage local ») implique la commande de la locomotion du PNJ (432₁) individuel vers un noeud (444) suivant sur le trajet (460) établi par détermination répétée, et si nécessaire changement, de la direction de mouvement (610) du PNJ individuel,
dans lequel le processeur est en outre configuré pour :
commander (360A-360N) normalement la locomotion de l'ensemble de la pluralité de PNJ (432₁-432ₙ) par le premier schéma de commande (340, « locomotion sur rail ») ;
lors de la détection (365A-365N) de l'occurrence d'une condition pour un PNJ (432₁) individuel, commuter (370A) vers le second schéma de commande (350, « locomotion à pilotage local ») pour commander la locomotion du PNJ (432₁) individuel ;
lorsque la locomotion du PNJ (432₁) individuel est commandée (370A) par le second schéma de commande (350, « locomotion à pilotage local ») :
déterminer (375A) que la condition détectée pour le PNJ (432₁) individuel ne s'applique plus ; et
en réponse, retourner (360A) au premier schéma de commande (340, « locomotion sur rail ») pour commander la locomotion du PNJ (432₁) individuel, dans lequel la condition est l'une quelconque des suivantes
• une distance dans l'espace multidimensionnel de monde simulé entre le PNJ individuel (432ₙ) et un personnage commandé par un joueur (430) est inférieure à une valeur de seuil ;
• une distance dans l'espace multidimensionnel de monde simulé entre le PNJ individuel et le personnage commandé par le joueur (430) est réduite à un rythme qui dépasse un rythme de seuil ;
• le PNJ individuel (432ₙ) est dans un même environnement local (406) dans l'espace multidimensionnel de monde simulé que le personnage commandé par le joueur (430) ;
• le PNJ individuel n'est pas dans un même environnement local dans l'espace multidimensionnel de monde simulé que le personnage commandé par le joueur (430) mais est toujours visible par un utilisateur (7) ; et
• l'action déterminée à prendre par le PNJ (432₁) individuel implique un déplacement de formation conjointement avec un ou plusieurs autres PNJ (432₂, 432₃) parmi la pluralité de PNJ,
et lorsque la locomotion du PNJ (432₁) individuel est commandée par le second schéma de commande (350, « locomotion à pilotage local ») :
détecter un risque de collision avec un autre de la pluralité de PNJ (432₁-432ₙ) ; et
en réponse changer la direction de mouvement (610), et optionnellement également de la vitesse de mouvement, du PNJ (432₁) individuel pour augmenter une distance attendue à un dit autre de la pluralité de PNJ (432₁-432ₙ).

10. Système selon la revendication 9, dans lequel le processeur (10) est en outre configuré pour effectuer les fonctions définies pour le procédé selon l'une quelconque des revendications 2 à 8.

11. Appareil de jeu (1), comprenant
une interface d'entrée/sortie (15) permettant à un utilisateur (7) de commander des entrées de jeu et de percevoir des sorties de jeu ; et
un système (1) selon la revendication 9 ou 10.

12. Support lisible par ordinateur comprenant des instructions lisibles par ordinateur qui, lorsqu'elles sont exécutées par un dispositif informatique, tel qu'un processeur (10), sont configurées pour amener le dispositif informatique à effectuer les fonctions définies pour le procédé selon l'une quelconque des revendications 1 à 8.
